# FASCICULE DE BREVET EUROPEEN

(11) **EP 3 274 564 B1**
(45) Date de publication et mention de la délivrance du brevet: **28.11.2018**
(21) Numéro de dépôt: 16729295.2
(22) Date de dépôt: 25.03.2016
(51) Int. Cl.: F01D 25/02, F02C 7/047

(54) **ÉTAGE DE COMPRESSEUR**
KOMPRESSORSTUFE
COMRESSOR STAGE

(30) Priorité: 26.03.2015 FR 1552537
(43) Date de publication de la demande: 31.01.2018
(73) Titulaire: SAFRAN AIRCRAFT ENGINES, 75015 Paris (FR)
(72) Inventeur: SCHOLTES, Christophe, 77550 Moissy-Cramayel Cedex (FR); DELAHAYE, Thomas, Nolwenn, Emmanuel, 77550 Moissy-Cramayel Cedex (FR); TOUYERAS, Armel, Marie, Jean, Pascal, 77550 Moissy-Cramayel Cedex (FR)
(74) Mandataire: Cabinet Beau de Loménie
(86) Numéro de dépôt international: PCT/FR2016/050692
(87) Numéro de publication internationale: WO 2016/151268

(56) Documents cités:
- EP-A2- 1 609 999
- US-A- 6 125 626
- US-B2- 8 182 209

## Description

### Arrière-plan de l'invention

La présente invention concerne le domaine des turbomachines et plus particulièrement celui des compresseurs.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Les termes « amont » et « aval » sont définis par rapport au sens de circulation normal du fluide de travail à travers la turbomachine.

Parmi les turbomachines on compte notamment les moteurs thermiques à turbine, qui permettent la conversion de l'énergie chimique d'un carburant en énergie thermique par combustion du carburant, et ensuite la conversion de cette énergie thermique en énergie mécanique par détente d'un fluide de travail chauffé par la combustion du carburant.

Dans les moteurs thermiques à turbine à combustion interne, tels que les turbines de gaz, les turbomoteurs, les turboréacteurs à simple ou double flux, ou les turbopropulseurs, la combustion s'opère directement dans le fluide de travail, qui est typiquement de l'air. Typiquement ces moteurs thermiques à turbine à combustion interne comportent au moins un compresseur en amont de la chambre de combustion et au moins une turbine, en aval de la chambre de combustion, couplée au compresseur pour son actionnement par une détente partielle du fluide de travail chauffé par la combustion du carburant. Normalement, un restant d'énergie thermique du fluide de travail peut alors être récupéré en tant qu'énergie mécanique par une tuyère de réaction et/ou au moins une turbine supplémentaire couplée à un arbre moteur.

Parmi les compresseurs, on compte notamment les compresseurs axiaux, dans lesquels la direction d'écoulement du fluide de travail est sensiblement parallèle à un axe central de rotation d'au moins un aubage rotatif, ou rotor, transférant de l'énergie au fluide de travail pour sa compression. Dans un étage de compresseur axial, le rotor comprend typiquement une pluralité de pales arrangées radialement, chaque pale du rotor s'étendant d'un pied de pale à une tête de pale plus éloignée que le pied de pale de l'axe central et présentant un jeu radial entre la tête de pale et un carter délimitant la veine de circulation du fluide de travail. Ce jeu radial est normalement nécessaire pour empêcher le contact des têtes de pale avec le carter, contact qui non seulement générerait des pertes par frottement, mais risquerait même d'endommager le carter et/ou le rotor. Toutefois, ce jeu permet aussi la naissance d'un tourbillon en bout de pale, tourbillon qui non seulement dégrade sensiblement le rendement de l'étage de compresseur, mais qui est également nuisible à la marge en stabilité du rotor, en particulier sur les premiers étages de compresseur.

Afin de souffler ces tourbillons de jeu, il a déjà été proposé dans l'état de la technique, par exemple dans les brevets US 8,182,209 et 8,882,443, ainsi que dans la demande internationale de brevet WO 2011/023891, d'injecter un jet d'air dans une couche limite adjacente au carter en amont des pales du rotor, de manière à énergiser cette couche limite, et augmenter la stabilité de l'écoulement en tête de pale au rotor. Localement, l'ampleur et persistance des tourbillons de jeu peuvent ainsi être fortement diminués, et la marge en stabilité et le rendement de cet étage de compresseur être sensiblement améliorés. Toutefois, l'air injecté de cette manière dans la couche limite est normalement prélevé en aval de l'étage de compresseur, ce qui implique une pénalité sur les performances, ainsi qu'une complexité mécanique accrue. Par ailleurs, cet air est en conséquence plus chaud que la couche limite dans laquelle il est injecté ce qui en limite l'efficacité pour énergiser la couche limite.

En même temps, un tel étage de compresseur comprend normalement aussi un stator comprenant une pluralité d'aubes directrices arrangées radialement autour d'un axe central dans la veine d'air en amont du rotor. Ces aubes directrices, surtout dans un premier étage de compresseur de turbopropulseur, turbomoteur ou turboréacteur à simple flux, peuvent présenter un risque de givrage. Pour limiter ce risque de givrage, des dispositifs électriques ont été proposés, ainsi que des variations d'angle d'attaque des aubes directrices. Toutefois, ces dispositifs augmentent aussi la complexité et le poids de l'étage de compresseur, ou ont un impact négatif sur ses performances.

### Objet et résumé de l'invention

La présente divulgation vise à remédier à ces inconvénients, en proposant un étage de compresseur avec dégivrage des aubes directrices et une marge de stabilité plus élevée, mais une complexité restreinte. Cet étage de compresseur peut comprendre au moins un carter délimitant une veine d'air, un stator comprenant une pluralité d'aubes directrices arrangées radialement autour d'un axe central dans la veine d'air, et un rotor, apte à tourner autour de l'axe central par rapport au stator, et comprenant une pluralité de pales arrangées radialement autour de l'axe central en aval des aubes directrices dans la veine d'air, chaque pale du rotor s'étendant d'un pied de pale à une tête de pale plus éloignée que le pied de pale de l'axe central et présentant un jeu radial entre la tête de pale et le carter. L'étage de compresseur peut notamment être un étage axial, quoique l'invention puisse aussi être éventuellement appliquée sur un étage du type dit radial ou centrifuge.

Dans au moins un mode de réalisation le but recherché est atteint grâce au fait que au moins une desdites aubes directrices comprend une cavité interne avec une entrée d'air chaud pour dégivrer cette aube directrice, et en ce que la cavité interne présente un premier passage de sortie vers un bord de fuite de l'aube directrice pour l'injection d'un jet d'air dans une couche limite adjacente au carter en amont des pales du rotor.

Grâce à ces dispositions, il est possible d'assurer d'une part le dégivrage de l'aube directrice, et d'autre part l'injection d'un jet d'air, refroidi dans la cavité interne de l'aube et donc plus dense que via une réinjection sans circuit de dégivrage, dans la couche limite de manière à souffler les tourbillons de jeu en aval et donc augmenter la marge de stabilité et le rendement du compresseur.

Afin de diriger le jet d'air vers la couche limite, ledit premier passage de sortie peut être délimité du côté de l'axe central, dans un plan axial et radial, par une surface convergeant vers le carter en aval. Cette surface peut être notamment courbe et convexe dans le plan axial et radial, pour une plus grande efficacité aérodynamique, mais pourrait alternativement être droite.

D'autre part, afin de suivre le contour du carter, ledit premier passage de sortie peut être délimité d'un côté opposé à l'axe central, dans un plan axial et radial, par une surface présentant, par rapport à une direction axiale, un angle d'inclinaison vers l'axe central en aval entre 0° et 30°.

En particulier, ledit premier passage de sortie peut être convergent vers l'aval, formant ainsi une tuyère convergente pour accélérer le jet d'air. Dans un plan axial et radial, ledit passage de sortie peut notamment présenter un angle de convergence entre 10° et 60°.

Pour une plus grande efficacité, ledit premier passage de sortie peut déboucher dans une fente sur une surface externe de l'aube directrice. Cette fente peut présenter un bord inférieur situé entre 80% et 95% d'une hauteur de veine et/ou un bord supérieur situé entre 90% et 100% de la hauteur de veine. Dans ce contexte, on entend par « hauteur de veine » la distance en direction radiale d'un bord intérieur de la veine d'air, du côté de l'axe central, à un bord extérieur de la veine d'air, du côté du carter, au niveau de la fente, et les positions du bord inférieur et du bord supérieur de la fente sont mesurées en direction radiale vers l'extérieur à partir du bord inférieur de la veine d'air.

Pour faciliter la provision d'air chaud, l'entrée d'air chaud peut notamment être située radialement vers l'extérieur par rapport à la cavité interne. Dans ce cas, pour assurer un meilleur échange thermique, la cavité interne peut présenter une cloison radiale, située entre l'entrée et le premier passage de sortie, et ouverte à une extrémité opposée à l'entrée d'air. L'air chaud suivra ainsi un parcours serpentin, cédant ainsi plus de chaleur à l'aube directrice pour mieux assurer son dégivrage et être injecté à une température moins élevée dans la couche limite.

Pour permettre le passage d'un plus grand débit d'air chaud pour le dégivrage, la cavité interne peut présenter au moins un autre passage de sortie, débouchant séparément du premier passage de sortie sur le bord de fuite de l'aube directrice, à une position plus proche de l'axe central que le premier passage de sortie. Toutefois, le premier passage de sortie peut présenter une section transversale supérieure à l'autre passage de sortie.

Pour augmenter le rendement de l'étage de compresseur axial à plusieurs régimes, les aubes directrices peuvent être à incidence variable.

La présente divulgation se rapporte aussi à un compresseur comprenant un tel étage de compresseur axial, en particulier comme premier étage, ainsi qu'à une turbomachine, notamment un moteur thermique à turbine à combustion interne et plus particulièrement un turbopropulseur, quoiqu'un turbomoteur, un turboréacteur ou une turbine à gaz soient aussi envisageables, entre autres, comprenant un tel étage de compresseur.

La présente divulgation se rapporte par ailleurs aussi à un procédé de suppression de tourbillon de jeu de tête de pale d'un tel étage de compresseur, dans lequel un jet d'air ayant circulé à travers la cavité interne de l'aube directrice pour son dégivrage est injecté en amont des pales du rotor, à travers le premier passage de sortie, dans une couche limite adjacente au carter en amont des pales du rotor et traversée par les têtes de pale, de manière à énergiser la couche limite.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en coupe longitudinale d'un turbopropulseur avec un compresseur multi-étages ;
- la figure 2 est une vue schématique d'un premier étage du compresseur du turbopropulseur de la figure 1 suivant un premier mode de réalisation de l'invention ;
- la figure 3 est un schéma illustrant l'effet d'un jet d'air injecté dans la couche limite adjacente au carter en amont du rotor sur l'incidence effective en tête de pale du rotor ; et
- la figure 4 est une vue schématique d'un premier étage de compresseur suivant un deuxième mode de réalisation de l'invention.

### Description détaillée de l'invention

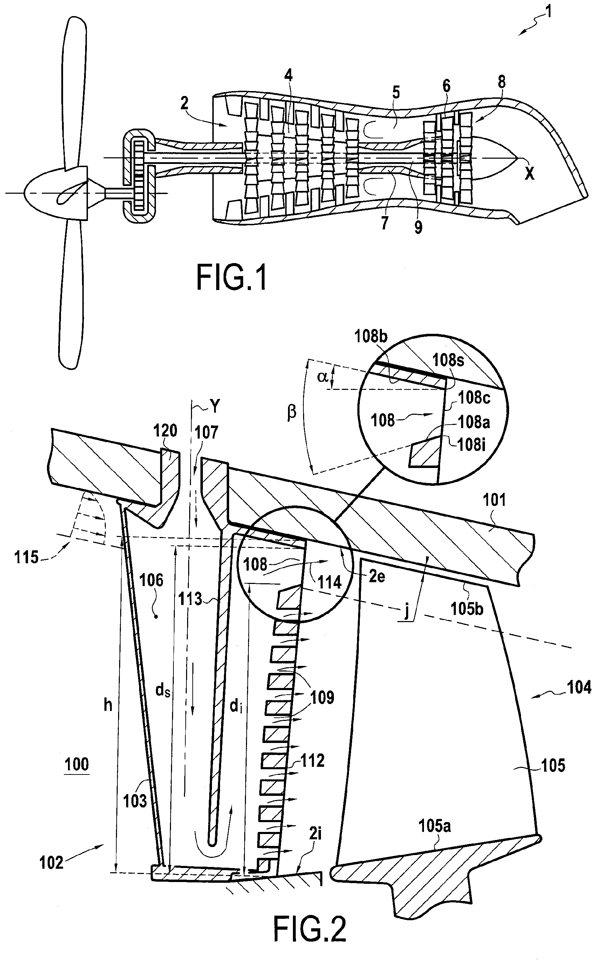

La figure 1 illustre un turbopropulseur 1 comprenant, suivant le sens d'écoulement de l'air dans une veine d'air 2, un compresseur multi-étages 4, une chambre de combustion 5, une première turbine 6, couplée au compresseur multi-étages 4 par un premier arbre rotatif 7, et une deuxième turbine 8, ou turbine libre, couplée à un deuxième arbre rotatif 9, ou arbre rotatif de sortie, qui peut notamment entraîner une hélice 10 pour assurer la propulsion d'un véhicule tel qu'un aéronef. Le compresseur 4, chambre de combustion 5 et turbine 6 forment ensemble ce qui est généralement connu comme « générateur de gaz », et qu'on peut retrouver dans la plupart des moteurs thermiques à turbine à combustion interne, y compris dans les turbomoteurs, turboréacteurs à simple ou double flux et turbines à gaz.

La figure 2 illustre un premier étage 100, axial, du compresseur 4. Cet étage 100 de compresseur axial comprend un carter 101 délimitant la veine d'air 2, un stator 102 avec une pluralité d'aubes directrices 103 arrangées radialement autour d'un axe central X dans la veine d'air 2, et un rotor 104, apte à tourner autour de l'axe central X avec l'arbre rotatif 7, et comprenant une pluralité de pales 105 arrangées radialement autour de l'axe central X en aval des aubes directrices 103 dans la veine d'air 2.

Chaque pale 105 du rotor 104 s'étend radialement d'un pied de pale 105a à une tête de pale 105b à proximité du carter 101. Un jeu j sépare la tête de pale 105b du carter 101, pour empêcher leur contact. Toutefois, des fuites de l'intrados à l'extrados de chaque pale 105 à travers ce jeu j réduisent la marge de stabilité et le rendement de ce premier étage 100 du compresseur 4. Par ailleurs, ces fuites causent des tourbillons qui peuvent se propager en aval du premier compresseur 4, générant des pertes de rendement et des vibrations supplémentaires aux autres étages.

Chaque aube 103 du stator 102 est connectée au carter 101 par un pivot 120 lui permettant de pivoter autour d'un axe radial Y afin de faire varier l'incidence de l'aube 103 par rapport à l'écoulement dans la veine d'air. En outre, dans le mode de réalisation illustré, chaque aube 103 est creuse, présentant une cavité interne 106 connectée à une source d'air chaud à travers une entrée 107 dans le pivot 120. La cavité interne 106 présente aussi une pluralité de passages de sortie 108,109 vers des fentes 110,111 au bord de fuite 112 de l'aube 103, afin de permettre un écoulement de l'air chaud, à travers la cavité interne 106, de l'entrée 107 vers les fentes 110, 111 de sortie. Par ailleurs, la cavité interne 106 présente aussi une nervure 113, formant une cloison radiale partielle dans la cavité 106, entre l'entrée 107 et les passages de sortie 108, 109, ouverte à l'extrémité opposée à l'entrée 107 en direction radiale. Ainsi, l'écoulement d'air chaud à travers la cavité interne 106 va suivre un parcours serpentin, avec un premier segment dans lequel l'air circule en direction sensiblement radiale de l'extérieur vers l'intérieur, un deuxième segment dans lequel l'air circule en direction sensiblement radiale de l'intérieur vers l'extérieur, et un coude entre les deux segments, au niveau de l'ouverture à travers la nervure 113. Ainsi, la nervure 113 allonge le parcours de l'air chaud à travers la cavité 106, maximisant ainsi l'échange de chaleur entre cet air chaud et l'aube 103.
En outre, parmi les passages de sortie 108, 109, le passage 108 le plus proche au carter 101 présente une section d'écoulement plus importante que les autres, et une géométrie particulière. Plus particulièrement, ce passage 108 est convergent en aval, formant ainsi une tuyère convergente accélérant l'écoulement de l'air en sortie pour former un jet d'air 114. Du côté radialement intérieur, c'est-à-dire du côté de l'axe central X, le passage 108 est délimité par une paroi 108a qui, dans le plan radial et axial illustré, converge vers le carter 101 en aval. Du côté radialement extérieur, c'est-à-dire du côté opposé à l'axe central X, le passage 108 est délimité par une paroi 108b qui, dans le même plan radial et axial, peut être approximativement parallèle au carter 101. Ainsi, comme le carter 101 peut être légèrement convergent en aval, la paroi 108b peut présenter, dans ce plan radial et axial, un angle α (ALPHA) de, par exemple, entre 0° et 30° par rapport à l'axe central X, convergeant ainsi vers l'axe central X en aval. L'angle β (BETA) de convergence entre les parois 108a et 108b vers l'aval peut être, par exemple, entre 10° et 60°. Le passage 108 débouche dans une fente 108c sur une surface externe de l'aube 103. Cette fente 108c peut être située directement sur le bord de fuite 112 de l'aube 103, quoique d'autres positions à proximité du bord de fuite 112, comme par exemple sur l'extrados ou l'intrados de l'aube 103, entre son maitre-couple et le bord de fuite 112, soient également envisageables. Dans le mode de réalisation illustré, avec une hauteur de veine h d'un bord intérieur 2i au bord extérieur 2e de la veine d'air 2 à la position axiale de la fente 108c, un bord inférieur 108i de la fente 108c est situé à une distance radiale dᵢ du bord intérieur 2i de la veine d'air 2 de, par exemple, entre 80% et 95% de la hauteur de veine h et un bord supérieur 108s de la fente 108c est situé à une distance radiale dₛ du bord intérieur 2i de la veine d'air 2 de, par exemple, entre 90% et 100% de la hauteur de veine h.

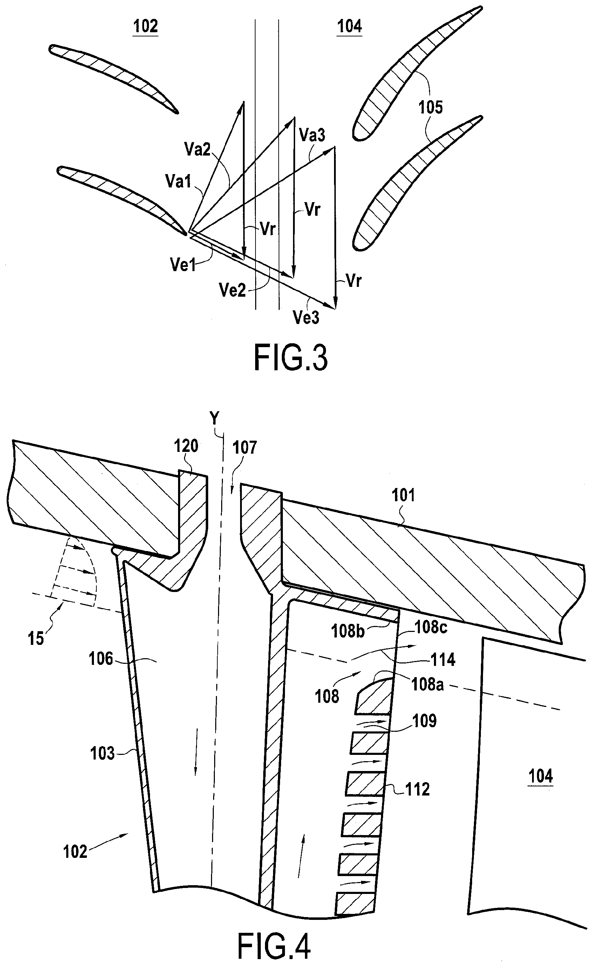

En fonctionnement, l'air chaud introduit dans la cavité 106 à travers l'entrée 107 va traverser cette cavité 106 jusqu'aux passages de sortie 108, 109. En ce faisant, l'air chaud, qui peut provenir d'une prise en aval d'au moins cet étage de compresseur 100, va chauffer l'aube 103, assurant ainsi son dégivrage, tout en se refroidissant. Le passage de sortie 108 va ainsi injecter un jet d'air 114 relativement froid, et donc dense, dans une couche limite 115 adjacente au carter 101 et traversée par les têtes 104b des pales 104 dans leur rotation, de manière à énergiser cette couche limite 115 en amont des pales. La figure 3 illustre l'effet de cette accélération de la couche limite en tête des pales 104. Dans ce diagramme, les flèches vₐ₁, vₐ₂, vₐ₃ correspondent à trois vecteurs de vitesse apparente en tête de pale, avec la même vitesse de rotation vᵣ, mais des vitesses d'écoulement vₑ₁,vₑ₂,Vₑ₃ croissantes dans la couche limite 115. On y voit ainsi comment l'augmentation de la vitesse d'écoulement de la couche limite 115, grâce à l'injection du jet d'air 114, peut diminuer l'angle d'incidence en tête d'aube, et ainsi éviter les décrochages locaux et la génération de tourbillons de jeu.

Bien que dans le mode de réalisation illustré sur la figure 2 la paroi 108a soit droite, il est également envisageable de la rendre courbe et convexe, comme dans le mode de réalisation illustré sur la figure 4, pour optimiser l'aérodynamique du passage 108 et ainsi réduire les pertes de charge dans ce passage. Le reste des éléments dans cette figure sont équivalents à ceux du premier mode de réalisation, et reçoivent en conséquence les mêmes repères. Il serait également envisageable de n'avoir des telles cavités internes et/ou un passage de sortie apte à injecter un jet d'air dans la couche limite que dans un sous-ensemble des aubes du stator.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Etage (100) de compresseur, comprenant au moins:
un carter (101) délimitant une veine d'air (2) ;
un stator (102) comprenant une pluralité d'aubes directrices (103) arrangées radialement autour d'un axe central (X) dans la veine d'air (2) ;
un rotor (104), apte à tourner autour de l'axe central (X) par rapport au stator (102), et comprenant une pluralité de pales (105) arrangées radialement autour de l'axe central (X) en aval des aubes directrices (103) dans la veine d'air (2), chaque pale (105) du rotor (104) s'étendant d'un pied (105a) de pale à une tête (105b) de pale plus éloignée que le pied (105a) de pale de l'axe central (X) et présentant un jeu radial (j) entre la tête (105b) de pale et le carter (101) ;
l'étage (100) de compresseur étant **caractérisé en ce qu'**au moins une desdites aubes directrices (103) comprend une cavité interne (106) avec une entrée (107) d'air chaud pour dégivrer cette aube directrice (103), et **en ce que** la cavité interne (106) présente un premier passage (108) de sortie vers un bord de fuite (112) de l'aube directrice (103) pour l'injection d'un jet d'air (114) dans une couche limite (115) adjacente au carter (101) en amont des pales (105) du rotor (104).

2. Etage (100) de compresseur suivant la revendication 1, dans lequel, dans un plan axial et radial, ledit premier passage de sortie (108) est délimité du côté de l'axe central par une surface (108a) convergeant vers le carter (101) en aval.

3. Etage (100) de compresseur suivant la revendication 2, dans lequel la surface (108a) délimitant le premier passage de sortie (108) du côté de l'axe central (X) est courbe et convexe dans le plan axial et radial.

4. Etage (100) de compresseur suivant l'une quelconque des revendications précédentes, dans lequel, dans un plan axial et radial, ledit premier passage de sortie (108) est délimité d'un côté opposé à l'axe central (X) par une surface (108b) présentant, par rapport à une direction axiale, un angle (α) d'inclinaison vers l'axe central en aval entre 0° et 30°.

5. Etage (100) de compresseur suivant l'une quelconque des revendications précédentes, dans lequel ledit premier passage de sortie (108) est convergent vers l'aval.

6. Etage (100) de compresseur suivant la revendication 5, dans lequel, dans un plan axial et radial, ledit premier passage de sortie (108) présente un angle de convergence (β) entre 10° et 60°.

7. Etage (100) de compresseur suivant l'une quelconque des revendications précédentes, dans lequel ledit premier passage de sortie (108) débouche dans une fente (108c) sur une surface externe de l'aube directrice (103).

8. Etage (100) de compresseur suivant l'une quelconque des revendications précédentes, dans lequel l'entrée (107) d'air chaud est située radialement vers l'extérieur par rapport à la cavité interne (106), et la cavité interne (106) présente une cloison radiale (113), située entre l'entrée (107) et le premier passage de sortie (108), et ouverte à une extrémité opposée à l'entrée d'air (107).

9. Etage (100) de compresseur suivant l'une quelconque des revendications précédentes, dans lequel la cavité interne présente au moins un autre passage de sortie (109), débouchant séparément du premier passage de sortie (108) sur le bord de fuite (112) de l'aube directrice (103), à une position plus proche de l'axe central (X) que le premier passage de sortie (108).

10. Etage (100) de compresseur suivant la revendication 9, dans lequel le premier passage de sortie (108) présente une section transversale supérieure à l'autre passage de sortie (109).

11. Etage (100) de compresseur suivant l'une quelconque des revendications précédentes, dans lequel les aubes directrices (103) sont à incidence variable.

12. Compresseur (4) comprenant un premier étage (100) suivant l'une quelconque des revendications précédentes.

13. Turbopropulseur (1) comprenant un compresseur (4) suivant la revendication 12.

14. Procédé de suppression de tourbillon de jeu de tête de pale d'un étage de compresseur suivant l'une quelconque des revendications 1 à 11, dans lequel un jet d'air (114) ayant circulé à travers la cavité interne (106) de l'aube directrice (103) pour son dégivrage est injecté en amont des pales (105) du rotor (104), à travers le premier passage de sortie (108), dans une couche limite (115) adjacente au carter (101) en amont des pales (105) du rotor (104) et traversée par les têtes de pale (105b), de manière à énergiser la couche limite (115).

## Patentansprüche

1. Kompressorstufe (100), umfassend mindestens:
ein Gehäuse (101), das einen Luftstrom (2) begrenzt,
einen Stator (102), der eine Vielzahl von Leitschaufeln (103) umfasst, die radial um eine Mittelachse (X) im Luftstrom (2) angeordnet sind,
einen Rotor (104), der in der Lage ist, sich um die Mittelachse (X) relativ zum Stator (102) zu drehen, und der eine Vielzahl von Blättern (105) umfasst, die radial um die Mittelachse (X) stromabwärts der Leitschaufeln (103) in dem Luftstrom (2) angeordnet sind, wobei jedes Blatt (105) des Rotors (104) sich von einem Blattfuß (105a) zu einem Blattkopf (105b) erstreckt, der von der Mittelachse (X) weiter entfernt ist als der Blattfuß (105a), und zwischen dem Blattkopf (105b) und dem Gehäuse (101) ein Radialspiel (j) aufweist,
wobei die Kompressorstufe (100) **dadurch gekennzeichnet ist, dass** mindestens eine der Leitschaufeln (103) einen inneren Hohlraum (106) mit einem Heißlufteinlass (107) zum Enteisen dieser Leitschaufel (103) aufweist, und dass der innere Hohlraum (106) einen ersten Auslasskanal (108) zu einer Abströmkante (112) der Leitschaufel (103) aufweist, um einen Luftstrahl (114) in eine dem Gehäuse (101) benachbarte Grenzschicht (115) stromaufwärts der Blätter (105) des Rotors (104) einzuspritzen.

2. Kompressorstufe (100) nach Anspruch 1, wobei in einer axialen und radialen Ebene der erste Auslasskanal (108) auf der Mittelachsenseite durch eine Fläche (108a) begrenzt ist, die in Richtung des Gehäuses (101) stromabwärts konvergiert.

3. Kompressorstufe (100) nach Anspruch 2, wobei die Fläche (108a), die den ersten Auslasskanal (108) auf der Mittelachsenseite (X) begrenzt, in der axialen und radialen Ebene gekrümmt und konvex ist.

4. Kompressorstufe (100) nach einem der vorhergehenden Ansprüche, wobei in einer axialen und radialen Ebene der erste Auslasskanal (108) auf einer der Mittelachse (X) gegenüberliegenden Seite durch eine Fläche (108b) begrenzt ist, die in Bezug auf eine axiale Richtung einen Neigungswinkel (a) zur Mittelachse stromabwärts zwischen 0° und 30° aufweist.

5. Kompressorstufe (100) nach einem der vorhergehenden Ansprüche, wobei der erste Auslasskanal (108) stromabwärts konvergiert.

6. Kompressorstufe (100) nach Anspruch 5, wobei der erste Auslasskanal (108) in einer axialen und radialen Ebene einen Konvergenzwinkel (β) zwischen 10° und 60° aufweist.

7. Kompressorstufe (100) nach einem der vorhergehenden Ansprüche, wobei der erste Auslasskanal (108) in einen Schlitz (108c) an einer Außenfläche der Leitschaufel (103) mündet.

8. Kompressorstufe (100) nach einem der vorhergehenden Ansprüche, wobei der Heißlufteinlass (107) radial nach außen in Bezug auf den inneren Hohlraum (106) angeordnet ist und der innere Hohlraum (106) eine radiale Trennwand (113) aufweist, die zwischen dem Einlass (107) und dem ersten Auslasskanal (108) angeordnet und an einem dem Lufteinlass (107) gegenüberliegenden Ende geöffnet ist.

9. Kompressorstufe (100) nach einem der vorhergehenden Ansprüche, wobei der innere Hohlraum mindestens einen weiteren Auslasskanal (109) aufweist, der getrennt vom ersten Auslasskanal (108) zur Abströmkante (112) der Leitschaufel (103) an einer Position näher an der Mittelachse (X) als der erste Auslasskanal (108) führt.

10. Kompressorstufe (100) nach Anspruch 9, wobei der erste Auslasskanal (108) einen größeren Querschnitt aufweist als der andere Auslasskanal (109).

11. Kompressorstufe (100) nach einem der vorhergehenden Ansprüche, wobei die Leitschaufeln (103) von veränderlichem Anstellwinkel sind.

12. Kompressor (4), umfassend eine erste Stufe (100) gemäß einem der vorhergehenden Ansprüche.

13. Propellerturbinenluftstrahltriebwerk (1), umfassend einen Kompressor (4) nach Anspruch 12.

14. Verfahren zum Unterdrücken eines Wirbels des Blattkopfspiels einer Kompressorstufe nach einem der Ansprüche 1 bis 11, wobei ein Luftstrahl (114), der durch den inneren Hohlraum (106) der Leitschaufel (103) zu deren Enteisung zirkuliert ist, stromaufwärts der Blätter (105) des Rotors (104) durch den ersten Auslasskanal (108) in eine Grenzschicht (115) eingespritzt wird, die stromaufwärts der Rotorblätter (105) des Rotors (104) an das Gehäuse (101) angrenzt und von den Blattköpfen (105b) durchquert wird, um die Grenzschicht (115) zu energetisieren.

## Claims

1. A compressor stage (100) comprising at least:
a casing (101) delimiting an air passage (2);
a stator (102) comprising a plurality of guide vanes (103) arranged radially around a central axis (X) in the air passage (2); and
a rotor (104) rotatable about the central axis (X) relative to the stator (102) and comprising a plurality of blades (105) arranged radially around the central axis (X) in the air passage (2) downstream from the guide vanes (103), each blade (105) of the rotor (104) extending from a blade root (105a) to a blade tip (105b) further away from the central axis (X) than the blade root (105a) and presenting radial clearance (j) between the blade tip (105b) and the casing (101);
the compressor stage (100) being **characterized in that** at least one of said guide vanes (103) includes an internal cavity (106) with a hot air inlet (107) for deicing the guide vane (103), and **in that** the internal cavity (106) presents a first outlet passage (108) towards a trailing edge (112) of the guide vane (103) for injecting an air jet (114) into a boundary layer (115) adjacent to the casing (101) upstream from the blades (105) of the rotor (104).

2. A compressor stage (100) according to claim 1, wherein, in an axial and radial plane, said first outlet passage (108) is delimited towards the central axis by a surface (108a) that converges downstream towards the casing (101).

3. A compressor stage (100) according to claim 2, wherein the surface (108a) delimiting the first outlet passage (108) beside the central axis (X) is curved and convex in the axial and radial plane.

4. A compressor stage (100) according to any one of the previous claims, wherein, in an axial and radial plane, said first outlet passage (108) is delimited away from the central axis (X) by a surface (108b) that presents, relative to an axial direction, an angle of inclination (a) in the range 0° to 30° towards the central axis downstream.

5. A compressor stage (100) according to any one to the previous claims, wherein said first outlet passage (108) converges downstream.

6. A compressor stage (100) according to claim 5, wherein, in an axial and radial plane, said first outlet passage (108) presents an angle of convergence (β) in the range 10° to 60°.

7. A compressor stage (100) according to any one to the previous claims, wherein said first outlet passage (108) opens out in a slot (108c) in an outside surface of the guide vane (103).

8. A compressor stage (100) according to any one to the previous claims, wherein the hot air inlet (107) is situated radially on the outside relative to the internal cavity (106), and the internal cavity (106) presents a radial partition (113) situated between the inlet (107) and the first outlet passage (108) and open at an end remote from the air inlet (107).

9. A compressor stage (100) according to any one to the previous claims, wherein the internal cavity presents at least one other outlet passage (109) opening out separately from the first outlet passage (108) in the trailing edge (112) of the guide vane (103) in a position that is closer to the central axis (X) than is the first outlet passage (108).

10. A compressor stage (100) according to claim 9, wherein the first outlet passage (108) presents a cross-section that is greater than the other outlet passage (109).

11. A compressor stage (100) according to any one to the previous claims, wherein the guide vanes (103) are of variable angle of incidence.

12. A compressor (4) including a first stage (100) according to claim 1.

13. A turboprop (1) including a compressor (4) according to claim 12.

14. A method of eliminating blade tip clearance vortices in a compressor stage according to any one of claims 1 to 11, wherein a jet (114) of air that has flowed through the internal cavity (106) of the guide vane (103) in order to deice it is injected upstream from the blades (105) of the rotor (104) and through the first outlet passage (108) into a boundary layer (115) adjacent to the casing (101) upstream from the blades (105) of the rotor (104) and through which the blade tips (105b) pass, for the purpose of energizing the boundary layer (115).
